# FASCICULE DE BREVET EUROPEEN

(11) **EP 3 956 219 B1**
(45) Date de publication et mention de la délivrance du brevet: **27.09.2023**
(21) Numéro de dépôt: 20725907.8
(22) Date de dépôt: 14.04.2020
(51) Int. Cl.: B64C 27/10, B64C 27/12, B64C 27/80, B64C 27/52, B64C 27/605, B64C 29/00

(54) **DISPOSITIF DE PROPULSION POUR AÉRODYNE À VOILURE TOURNANTE ET À DÉCOLLAGE ET ATTERRISSAGE VERTICAUX, ET AÉRODYNE COMPRENANT AU MOINS UN TEL DISPOSITIF DE PROPULSION**
ANTRIEBSVORRICHTUNG FÜR EINEN DREHFLÜGLER MIT SENKRECHTSTART UND -LANDUNG UND EIN DREHFLÜGLER MIT MINDESTENS EINER SOLCHEN ANTRIEBSVORRICHTUNG
PROPULSION DEVICE FOR ROTORCRAFT WITH VERTICAL TAKE-OFF AND LANDING, AND A ROTORCRAFT COMPRISING AT LEAST ONE SUCH PROPULSION DEVICE

(30) Priorité: 18.04.2019 FR 1904060
(43) Date de publication de la demande: 23.02.2022
(73) Titulaire: NEXTER Systems, 78034 Versailles Cedex (FR)
(72) Inventeur: GAUTIER, Pierre, 18023 Bourges (FR)
(74) Mandataire: Cabinet Chaillot
(86) Numéro de dépôt international: PCT/IB2020/053493
(87) Numéro de publication internationale: WO 2020/212836

(56) Documents cités:
- WO-A1-2006/076743
- WO-A1-2010/118643
- CN-A- 106 915 457
- CN-A- 108 557 070
- CN-U- 207 328 827
- FR-A- 1 202 127
- FR-B1- 2 980 117
- GB-A- 2 491 129
- US-A- 2 256 918
- US-B2- 7 789 341

## Description

La présente invention se rapporte au domaine technique des aérodynes à voilure tournante et à décollage et atterrissage verticaux, et plus spécifiquement à la catégorie des aérodynes à propulsion par rotors coaxiaux contrarotatifs. En particulier, la présente invention concerne un dispositif de propulsion par rotors coaxiaux contrarotatifs et un aérodyne comprenant au moins un tel dispositif de propulsion.

L'aérodyne selon la présente invention peut être habité (hélicoptère) ou non habité (drone).

Dans la présente demande, le terme « propulsion » comprend la sustentation de l'aérodyne, la propulsion en vol en translation dans les directions verticale, longitudinale et latérale, ainsi que le contrôle d'attitude en lacet, roulis et tangage.

Il a été proposé dans le brevet FR2980117 B1 un dispositif de propulsion pour aérodyne à rotors coaxiaux contrarotatifs, comprenant un unique moteur contrarotatif ayant deux arbres de sortie coaxiaux à chacun desquels est fixé un rotor qui consiste en un ensemble de pales à pas fixe. La rotation en sens inverse des rotors permet la sustentation, et le déplacement en translation verticale et le contrôle de l'attitude en lacet sont obtenus par variation de la vitesse de rotation des deux rotors, respectivement collectivement et l'un par rapport à l'autre. Afin de diriger l'aérodyne en translation longitudinale et en translation latérale, simultanément ou non, il est proposé de fixer le moteur contrarotatif sur un module d'orientation qui est porté par le châssis de façon à pouvoir pivoter autour des axes de roulis et de tangage sous l'action de moyens de commande. Ainsi, le déplacement de l'aérodyne dans le plan horizontal est obtenu par rotation autour de l'axe de roulis et/ou de l'axe de tangage de l'ensemble du dispositif de propulsion, composé du module d'orientation, du moteur contrarotatif et des deux rotors.

L'un des avantages de cet aérodyne est qu'il est de structure plus simple car il s'affranchit des systèmes collectif et cyclique à plateaux et bielles qui sont utilisés classiquement pour faire varier le pas des pales qui sont articulées au moyeu de chaque rotor, la variation collective du pas des pales permettant de contrôler le déplacement en translation verticale alors que la variation cyclique asymétrique du pas des pales permet de contrôler l'attitude de l'aérodyne en roulis et tangage, et donc le déplacement dans le plan horizontal. Le brevet US 2256918 A décrit un exemple d'un tel dispositif de propulsion avec pales à incidence variable et systèmes collectif et cyclique de structure complexe.

On peut cependant craindre un manque de réactivité de l'aérodyne à des commandes de déplacement dans le plan horizontal. En effet, dans la mesure où l'ensemble du dispositif de propulsion tourne autour des axes horizontaux de roulis et de tangage qui sont situés en dessous du dispositif de propulsion, la masse qui doit être mise en mouvement est importante, ce qui signifie une inertie accrue du dispositif de propulsion nuisant à sa réactivité.

Par ailleurs, dans le cas d'une application à un drone, pour lequel la masse du dispositif de propulsion représentera une part importante de la masse totale de l'aérodyne, on pourra également craindre une instabilité en vol. En effet, dans la mesure où le centre de rotation du dispositif de propulsion ne se situe non pas à son centre de gravité mais en partie inférieure, au niveau du module d'orientation, le centre de gravité sera constamment déplacé du fait des mouvements incessants en roulis et tangage durant le vol.

La maniabilité de l'aérodyne selon le brevet FR2980117 B1 est donc susceptible en pratique d'être insuffisante, par manque de réactivité et dans certains cas également par manque de stabilité.

La présente invention vise à proposer un dispositif de propulsion d'aérodyne à rotors coaxiaux contrarotatifs offrant une maniabilité améliorée, tout en conservant l'avantage de simplicité procuré par l'absence de systèmes collectif et cyclique de variation de pas de pales.

La solution selon la présente invention réside dans le montage de chaque rotor sur un châssis de telle sorte que seuls les rotors sont déplacés autour des axes de lacet, de roulis et de tangage, et non l'ensemble du dispositif de propulsion. Ceci est rendu possible par l'utilisation d'une liaison rotule à doigt creuse pour relier chaque rotor à une partie rotative qui est située à l'intérieur du châssis, prévu creux à cet effet, et qui entraîne en rotation le rotor, depuis l'intérieur de ce dernier, la liaison rotule à doigt autorisant la rotation du rotor uniquement autour des axes de roulis et de tangage alors que le reste du dispositif de propulsion reste fixe par rapport à ces axes.

La présente invention a ainsi pour objet un dispositif de propulsion pour aérodyne à voilure tournante et à décollage et atterrissage verticaux, par rotors coaxiaux contrarotatifs mobiles en lacet, roulis et tangage, le dispositif de propulsion comprenant :
- un châssis creux et ayant un axe longitudinal qui, en utilisation, est coaxial à l'axe de lacet,
- un rotor supérieur et un rotor inférieur ayant chacun une partie centrale annulaire, configurée pour fixer à sa périphérie des pales avec un pas fixe, les rotors étant espacés l'un au-dessus de l'autre le long de l'axe de lacet, chaque rotor définissant un disque rotor et étant apte à être entraîné en rotation autour d'un axe de rotation qui est perpendiculaire au disque rotor et à être incliné autour de l'axe de roulis et de l'axe de tangage,
- des moyens d'entraînement pour entraîner en rotation chaque rotor autour de son axe de rotation, et
- des moyens de commande d'inclinaison pour incliner les rotors autour de l'axe de roulis et de l'axe de tangage,
le dispositif de propulsion étant caractérisé par le fait que les moyens d'entraînement comprennent des moyens moteurs et, pour chaque rotor, une partie rotative qui est apte à être entraînée en rotation autour de l'axe de lacet par les moyens moteurs, chaque partie rotative se situant dans la partie annulaire centrale du rotor respectif et étant reliée à cette dernière par une liaison rotule à doigt, dont le centre est l'intersection du disque rotor respectif et de l'axe de lacet et dont l'axe est l'axe de rotation du rotor.

On entend par l'expression « axe de la liaison rotule à doigt » l'axe autour duquel la rotation relative entre le rotor et la partie rotative est interdite.

Selon un mode de réalisation particulier, les parties rotatives sont chacune formées par une bague d'entraînement montée rotative autour d'une portée circulaire du châssis dans laquelle est ménagée au moins une fenêtre à travers laquelle s'étend un organe d'entraînement apte à être entraîné en rotation par les moyens moteurs et apte à entraîner en rotation la bague d'entraînement.

Selon un mode de réalisation particulier, chaque rotor est en contact sphérique avec la bague d'entraînement respective, le centre de la sphère de contact étant l'intersection de l'axe de lacet et du disque rotor du rotor, et étant prévue une rainure débouchant dans la surface intérieure de la partie centrale du rotor et dont la longueur est parallèle à l'axe de lacet, rainure dans laquelle un doigt radial solidaire de la bague d'entraînement est engagé de façon à transmettre au rotor le mouvement de rotation de la bague d'entraînement autour de l'axe de lacet tout en autorisant des rotations du rotor autour de l'axe de roulis et de l'axe de tangage.

Selon un mode de réalisation particulier, chaque bague d'entraînement présente sur sa surface intérieure une denture circonférentielle et l'organe d'entraînement respectif est une première roue dentée en engrènement avec la denture.

Un entraînement sans contact, par exemple par un dispositif d'entraînement magnétique, serait également possible.

Selon un mode de réalisation particulier, les moyens moteurs comprennent, pour chaque rotor, un moteur dédié audit rotor et ayant un arbre de sortie qui est parallèle à l'axe de lacet et dont le mouvement de rotation est transmis à l'organe d'entraînement, facultativement par l'intermédiaire d'une seconde roue dentée montée sur l'arbre de sortie et en engrènement avec la première roue dentée.

Selon un mode de réalisation particulier, les moyens moteurs pour les deux rotors se situent à l'intérieur du châssis, entre les parties rotatives, de préférence les moyens moteurs comprenant deux moteurs dédiés alignés l'un avec l'autre, l'arbre de sortie d'un moteur se situant côté rotor supérieur tandis que l'arbre de sortie de l'autre moteur se situant côté rotor inférieur, les deux moteurs s'étendant le long d'une paroi intérieure de l'enveloppe latérale du châssis.

Avec une telle configuration des moyens moteurs entre les deux parties rotatives, qui est possible du fait de l'utilisation d'un châssis creux, le dispositif de propulsion est bien plus compact que celui du brevet FR2980117 B1, puisqu'aucune hauteur n'est ajoutée à celle résultant de la distance entre les rotors. L'utilisation de bagues d'entraînement creuses, notamment de même diamètre que le châssis, permet d'augmenter encore la compacité du dispositif de propulsion puisqu'une partie des moyens moteurs, et éventuellement des moyens de commande d'inclinaison comme cela sera discuté ci-après, peut être placée à la même hauteur que les rotors.

De plus, il est alors possible d'augmenter la taille des pales sans pour autant augmenter obligatoirement la taille du dispositif de propulsion, ou au moins en l'augmentant de manière significativement moindre par comparaison au brevet FR2980117 B1.

Cette compacité du dispositif de propulsion est particulièrement avantageuse dans le cas d'un drone, et de manière spécifique pour un usage nécessitant une furtivité, à la fois visuelle et sonore, et notamment un usage militaire.

En variante, les moyens moteurs peuvent comprendre au moins un moteur situé à l'extérieur du châssis et apte à produire un mouvement de sortie, et des moyens de transmission du mouvement de sortie du ou des moteurs aux parties rotatives pour les entraîner en rotation, au moins une partie desdits moyens de transmission étant située à l'intérieur du châssis.

Une telle configuration avec les moyens moteurs en partie hors du châssis du dispositif de propulsion, là encore rendu possible du fait du châssis creux et de l'entraînement des rotors par l'intérieur, pourra généralement être envisagée pour un aérodyne habité, nécessitant une puissance motrice plus importante. On pourrait utiliser tout type de motorisation connue, tant qu'elle permet de produire des mouvements de rotation en sens inverse pour les deux rotors, ces mouvements de rotation pouvant être transmis aux parties rotatives des moyens d'entraînement en rotation, par des moyens de transmission s'étendant dans le châssis qui sont en soi à la portée de l'homme du métier, comme par exemple des arbres de transmission, etc.

Selon un mode de réalisation particulier, les moyens de commande d'inclinaison comprennent au moins deux tiges de commande, de longueur fixe, situées à l'extérieur du châssis, entre les rotors, et déplaçables en translation parallèlement à l'axe de lacet, dans les deux sens, de façon à ce que chacune soit apte à appuyer par une extrémité de celle-ci sur l'un des rotors et ainsi à le faire tourner autour d'un axe, les tiges de commande étant écartées l'une de l'autre angulairement de telle sorte que lesdits axes sont différents, les moyens de commande d'inclinaison comprenant en outre des moyens moteurs pour déplacer en translation chacune des tiges.

De tels moyens de commande d'inclinaison participent à la compacité du dispositif de propulsion, puisque les tiges de commande n'imposent pas une augmentation de la distance entre les rotors, ce qui est le cas pour les systèmes à plateau cyclique et bielles.

Selon un mode de réalisation particulier, les moyens moteurs comprennent, pour chaque tige de commande, un moteur bidirectionnel dédié dont l'arbre de sortie entraîne en rotation une vis parallèle à l'axe de lacet et sur laquelle est monté un écrou bloqué en rotation, de sorte qu'une rotation de la vis déplace l'écrou le long de la vis, l'écrou portant un bras qui s'étend hors du châssis, en passant à travers une fente parallèle à l'axe de lacet, et dont la tige de commande est solidaire, les moteurs étant, de préférence, des moteurs pas à pas.

Selon un mode de réalisation particulier, est prévue, pour chaque tige de commande, une tige dite miroir de longueur fixe, située à l'extérieur du châssis, entre les rotors, qui lui est parallèle et diamétralement opposée à la tige de commande respective et déplaçable en translation parallèlement à l'axe de lacet, dans les deux sens, et dont chacune des deux extrémités est en contact avec un rotor respectif.

Selon un mode de réalisation particulier, le dispositif de propulsion comprend deux tiges de commande, au moins les deux extrémités de chacune des tiges de commande étant en contact sphérique avec un plateau glissant qui est disposé sur la partie centrale de la face de chaque rotor orientée vers l'autre rotor, plateau glissant monté d'une manière autorisant une rotation relative entre le plateau glissant et le rotor autour de l'axe de rotation du rotor, des moyens de blocage étant prévus pour empêcher la rotation du plateau glissant par rapport aux tiges.

Les moyens de blocage peuvent comprendre des aimants, portés par les tiges ou par le plateau glissant, aimants coopérant avec un matériau ferromagnétique respectivement porté ou formant le plateau glissant ou les tiges, de telle sorte qu'une rotation du plateau glissant autour de l'axe de rotation est interdite par la force d'attraction entre les tiges de commande et le plateau glissant résultant de la coopération desdits aimants et desdites pièces ferromagnétiques.

Selon un autre mode de réalisation, les moyens de blocage comprennent au moins une biellette solidaire du châssis par une première extrémité au niveau d'une liaison pivot et solidaire d'un plateau glissant par une deuxième extrémité au niveau d'une liaison rotule, les extrémités de la biellette étant reliées par une tige coulissante, la biellette accompagnant ainsi les déplacements du plateau glissant tout en interdisant sa rotation.

Le plateau glissant peut être relié à la partie centrale du rotor par un roulement.

Selon un mode de réalisation particulier, le dispositif de propulsion comprend en outre des tiges de rattrapage d'usure, à ressort de rappel, situées à l'extérieur du châssis, entre les rotors, et déplaçables en translation parallèlement à l'axe de lacet, dans les deux sens, et dont chacune des deux extrémités est en contact, par sollicitation élastique, avec le plateau glissant, les tiges de commande et les tiges de rattrapage d'usure, et le cas échéant les tiges miroirs, étant régulièrement réparties autour du châssis et toutes à la même distance de l'axe de lacet.

Selon un mode de réalisation particulier, l'ensemble des moyens moteurs se situent entre les parties rotatives, et de préférence les moteurs dédiés à la commande de l'inclinaison sont alignés l'un avec l'autre et disposés latéralement aux moteurs dédiés à l'entraînement des parties rotatives, l'arbre de sortie d'un moteur dédié à la commande de l'inclinaison se situant côté rotor supérieur tandis que l'arbre de sortie de l'autre moteur se situe côté rotor inférieur, les vis s'étendant à côté des différents moteurs et le long de la paroi intérieure de l'enveloppe latérale du châssis.

Avec une telle configuration, particulièrement avantageuse pour un aérodyne non habité, la compacité du dispositif de propulsion est maximale, l'ensemble des moyens d'entraînement en rotation des rotors et des moyens de commande d'inclinaison étant reçus dans un espace délimité en hauteur par les deux rotors.

De plus, seules les différentes tiges se situent hors du châssis, les autres éléments étant ainsi protégés par ce dernier, rendant le dispositif de propulsion étanche intrinsèquement. Cela augmente encore la fiabilité du dispositif de propulsion, qui est déjà élevée du fait de l'utilisation de mécanismes à moteurs, engrenages et systèmes à vis-écrou, bien plus fiables que l'utilisation de bielles.

La présente invention a également pour objet un aérodyne à voilure tournante et à décollage et atterrissage verticaux, dont la propulsion est assurée par un dispositif de propulsion, caractérisé par le fait que le dispositif de propulsion est tel que défini ci-dessus.

Comme indiqué ci-dessus, l'aérodyne peut être habité (hélicoptère) ou non habité (drone).

Pour mieux illustrer l'objet de la présente invention, on va en décrire ci-après un mode de réalisation particulier, avec référence aux dessins annexés. Sur ces dessins :
[Fig.1] : vue d'ensemble d'un dispositif de propulsion selon un mode de réalisation particulier de la présente invention.
[Fig.2] : vue en perspective du dispositif de propulsion, les pales ayant été omises.
[Fig.3] : vue en perspective, en coupe verticale, d'une partie du rotor supérieur et de la bague rotative.
[Fig.4] : vue en perspective, en coupe verticale, d'une partie supérieure du dispositif de propulsion, seuls les moyens d'entraînement en rotation du rotor étant représentés.
[Fig.5] : vue en perspective, en coupe verticale, du dispositif de propulsion, suivant un angle de vue laissant voir l'intérieur du dispositif, seuls les moyens de commande d'inclinaison des rotors ayant été représentés.
[Fig.6] : vue du dispositif de propulsion de la Figure 5, suivant un autre angle de vue montrant l'extérieur du dispositif.

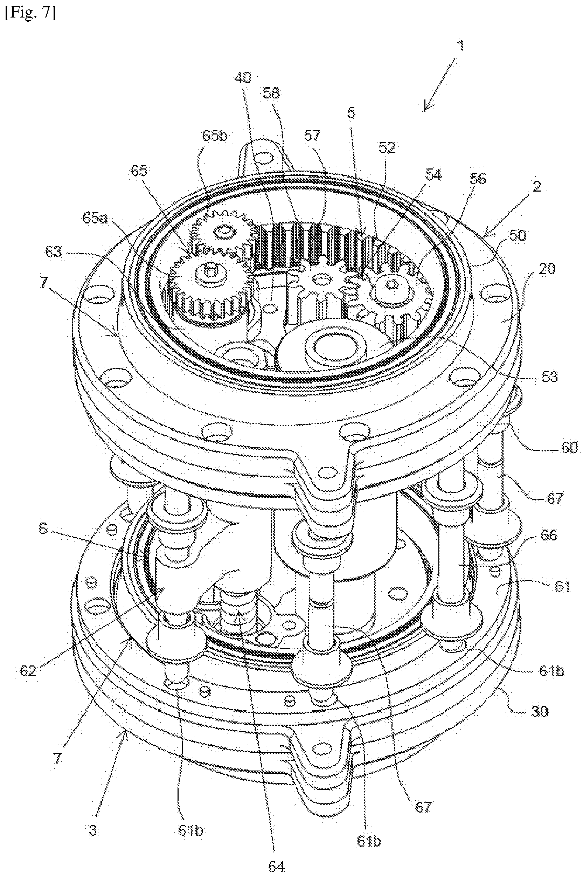

[Fig.7] : vue schématique en perspective, de dessus, du dispositif de propulsion, le châssis ayant été omis.
[Fig.8] : vue schématique en perspective, en coupe verticale, du dispositif de propulsion, montrant à la fois les moyens d'entraînement en rotation et les moyens de commande d'inclinaison.
[Fig.9] : vue schématique de dessus du dispositif de propulsion.
[Fig.10] : vue d'une variante du mode de réalisation des moyens de blocage des plateaux glissants.
[Fig.11] : vue schématique de côté d'un drone selon la présente invention.
[Fig.12] : vue schématique de côté d'un hélicoptère selon la présente invention, les moyens moteurs pour l'entraînement en rotation des rotors étant situés en partie hors du châssis du dispositif de propulsion.

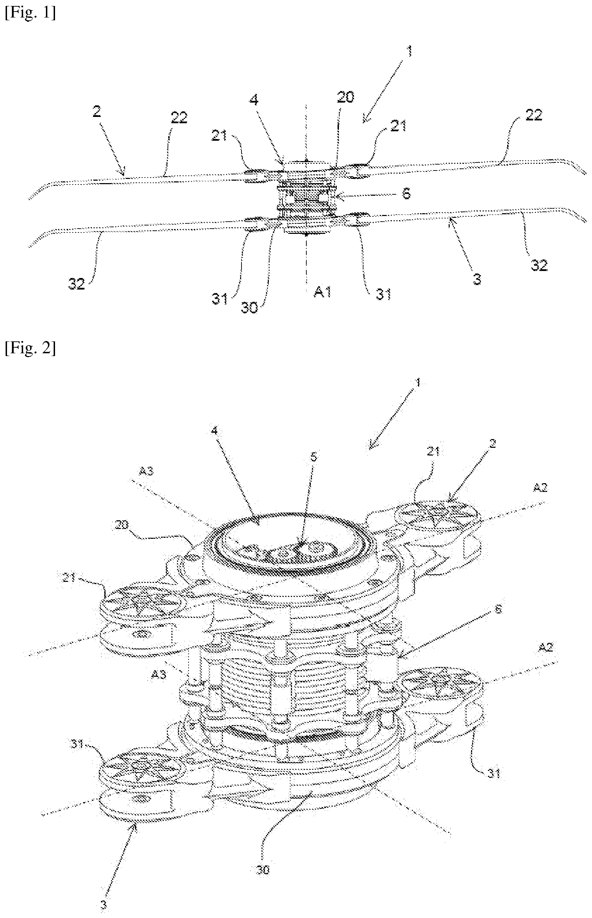

Si l'on se réfère tout d'abord aux Figures 1 et 2, on peut voir qu'un dispositif de propulsion 1 selon le mode de réalisation particulier comprend deux rotors contrarotatifs 2, 3, à savoir un rotor supérieur 2 et un rotor inférieur 3, montés sur un châssis 4 creux intégrant l'ensemble des composants nécessaires à son fonctionnement autonome, en particulier des moyens 5 d'entraînement en rotation des rotors 2, 3 et des moyens 6 de commande de l'inclinaison des rotors 2, 3.

Le châssis 4 est de forme globalement cylindrique et a une extrémité supérieure fermée par un chapeau et une extrémité inférieure par laquelle le châssis 4 peut être fixé à la cellule d'un aérodyne, un volume interne globalement cylindrique étant défini entre lesdites extrémités et l'enveloppe latérale du châssis 4.

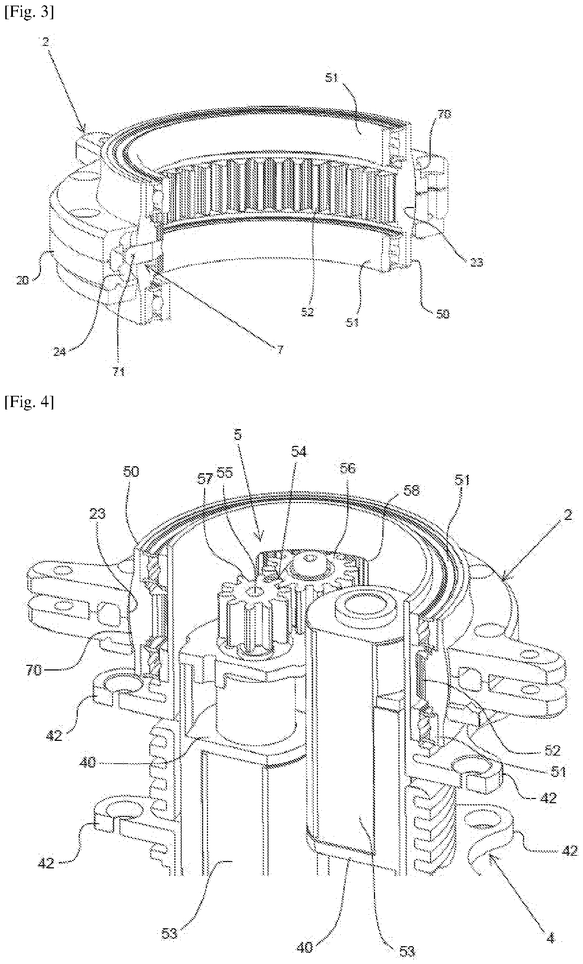

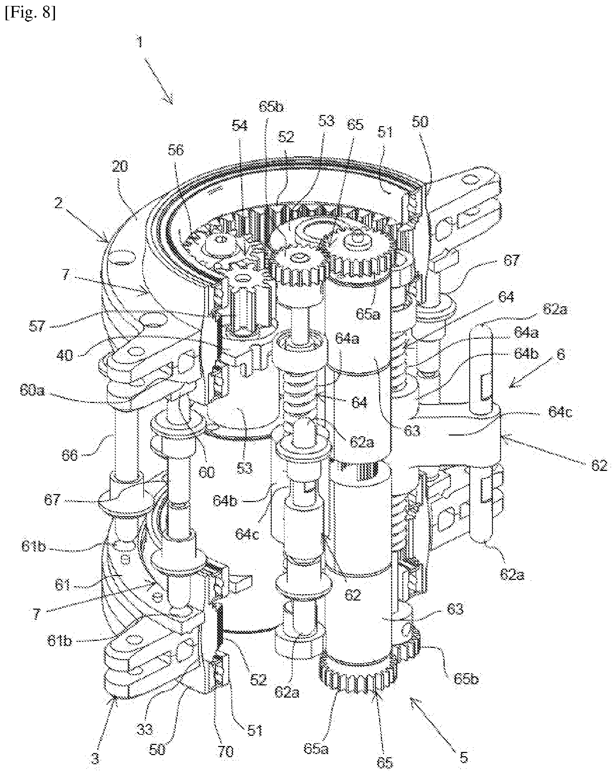

Comme on peut le voir sur les Figures 4 et 8, des supports 40 s'étendent vers l'intérieur du volume interne du châssis 4, supports 40 auxquels sont fixés les composants faisant partie des moyens d'entraînement 5 et des moyens de commande d'inclinaison 6.

Chaque rotor 2, 3 comprend une partie centrale 20, 30 annulaire qui porte à sa périphérie des ailes 21, 31 pour la fixation de pales 22, 32. Chaque pale 22, 32 est fixé à l'aile 21, 31 respective de manière rigide et avec un pas fixe. En d'autres termes, les pales 22, 32 sont reliées d'un seul tenant aux parties centrales 20, 30.

Dans le mode de réalisation, chaque rotor 2, 3 comprend deux pales 22, 32 disposées à 180° l'une de l'autre et dont la rotation décrit un plan dénommé disque rotor. On pourra bien entendu prévoir pour chaque rotor un nombre quelconque de pales, qui toutefois définissent ensemble un disque rotor.

Le rotor supérieur 2 et le rotor inférieur 3 sont montés sur le châssis 4 de manière à pouvoir être entraînés en rotation autour d'un axe de rotation perpendiculaire à leur disque rotor, respectivement à l'extrémité supérieure et à l'extrémité inférieure du châssis 4.

En particulier, chaque rotor 2, 3 est relié au châssis 4 par l'intermédiaire d'une bague d'entraînement 50 autour de laquelle le rotor 2, 3 est monté et à laquelle il est relié par une liaison rotule à doigt 7, comme on peut mieux le voir sur les Figures 3 et 4.

Le châssis 4 présente à chaque extrémité une portée circulaire 41 (figure 4) autour de laquelle la bague d'entraînement 50 est montée de manière à pouvoir tourner autour de l'axe longitudinal du châssis 4, qui en utilisation est coaxial à l'axe de lacet A1, le guidage en rotation étant assuré par deux roulements 51 espacés l'un de l'autre selon le premier axe,

La bague d'entraînement 50 présente une face extérieure dont la région médiane circonférentielle est formée par une surface convexe 70 et une face intérieure munie, dans sa région médiane circonférentielle, d'une denture 52 circonférentielle. La bague d'entraînement 50 porte en outre un doigt 71 radial en saillie de la surface convexe 70.

La partie centrale 20, 30 annulaire du rotor 2, 3 présente sur sa face intérieure une surface concave 23, 33 (Figure 8 pour le rotor inférieur 3) dans laquelle débouche une rainure 24 verticale servant à recevoir le doigt 71.

La surface convexe 70 et la surface concave 23, 33 sont définies pour être en contact sphérique l'une avec l'autre, avec comme centre de la sphère de contact l'intersection du premier axe (ou axe de lacet A1, ou axe longitudinal du châssis 4) et du disque rotor. Ainsi, le rotor 2, 3 peut tourner autour de deuxième et troisième axes qui sont perpendiculaires l'un à l'autre et tous les deux perpendiculaires au premier axe. De plus, la rainure 24 a la largeur du doigt 71, de sorte qu'une fois le doigt 71 engagé dans la rainure 24, la rotation relative entre le rotor 2, 3 et la bague d'entraînement 50 autour de l'axe de rotation du rotor 2, 3 est interdite. La hauteur de la rainure 24 est quant à elle supérieure à la largeur du doigt 71, de sorte que ce dernier ne s'oppose pas à la rotation du rotor 2, 3 autour des deuxième et troisième axes.

La liaison rotule à doigt 7 est donc formée par la surface convexe 70, le doigt 71, la surface concave 23, 33 et la rainure 24, et l'on comprend aisément qu'elle permet à chaque rotor 2, 3 d'être entraîné en rotation autour de son axe de rotation par l'intermédiaire de la bague d'entraînement 50 et d'être incliné par rapport à la bague d'entraînement 50.

Une fois fixé sur l'aérodyne, le premier axe du dispositif de propulsion 1 est coaxial à l'axe de lacet A1 de l'aérodyne et chacun des deuxième et troisième axes est coaxial à l'un respectif de l'axe de roulis A2 et de l'axe de tangage A3.

On va maintenant décrire les moyens 5 d'entraînement en rotation des rotors 2, 3 avec référence aux Figures 3 et 4.

Dans le mode de réalisation représenté, les moyens d'entraînement 5 comprennent les deux bagues d'entraînement 50 et, pour chacune de celles-ci, un moteur d'entraînement 53 et un engrenage 54.

Chaque moteur 53 comprend un arbre de sortie 55 dont le mouvement de rotation est transmis à la bague d'entraînement 50 par l'engrenage 54.

Dans le mode de réalisation représenté, l'ensemble des moyens d'entraînement 5 se situent à l'intérieur du châssis 4, plus particulièrement entre les deux plans horizontaux des bagues d'entraînement 50. Chaque moteur 53 est un moteur électrique réduit et est porté par deux supports 40 en étant orienté pour que son arbre de sortie 55 soit parallèle au premier axe et s'étende en direction de la bague d'entraînement 50 dont il doit assurer l'entraînement en rotation. L'engrenage 54 comprend une première roue dentée 56 en engrènement avec la denture 52 de la bague d'entraînement 50 et en engrènement avec une seconde roue dentée 57 montée sur l'arbre de sortie 55. Afin de permettre l'engrènement entre la première roue dentée 56 et la denture 52, une fenêtre traversante 58 est ménagée dans la portée circulaire 41, à travers laquelle passent les dents de la première roue dentée 56 et de la denture 52. On comprendra aisément que l'engrenage 54 se situe à la même hauteur que la denture 51 qu'il entraîne en rotation.

Chaque moteur 53 est dédié à l'entraînement d'un rotor 2, 3 respectif afin d'assurer une commande individuelle de la vitesse de rotation des rotors 2, 3. On pourra donc les faire tourner à la même vitesse, ou à des vitesses différentes (mais toujours en sens inverse) pour le contrôle de l'attitude de l'aérodyne en lacet.

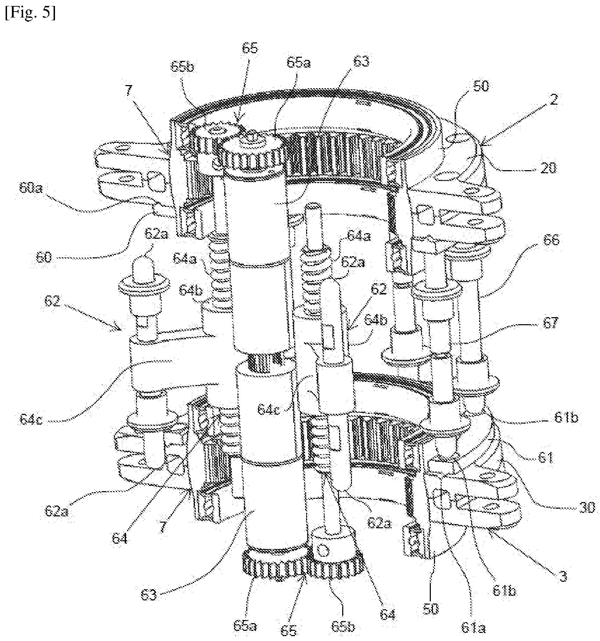

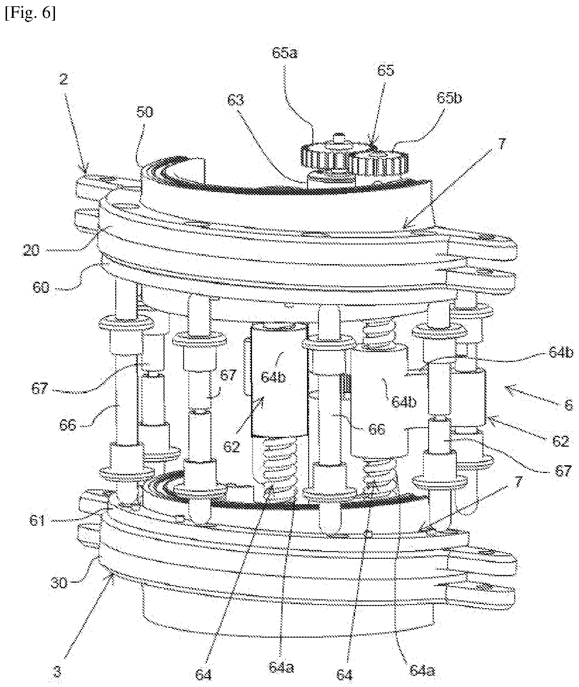

On va maintenant décrire les moyens 6 de commande de l'inclinaison des rotors 2, 3 avec référence aux Figures 5 et 6.

Dans le mode de réalisation représenté, les moyens de commande d'inclinaison 6 comprennent, pour chaque rotor 2, 3, un plateau glissant 60, 61, une tige de commande 62 servant à commander l'inclinaison du rotor 2, 3 autour de l'axe de roulis A2 et de l'axe de tangage A3, un moteur 63, un système vis-écrou 64, un engrenage 65, une tige dite miroir 66 et une pluralité de tiges 67 de rattrapage d'usure.

Chaque moteur 63 est ici un moteur réduit, pas à pas, assurant donc une commande précise en position, situé à l'intérieur du châssis 4, entre les deux plans horizontaux des bagues d'entraînement 50, et est porté par un support 40 solidaire du châssis 4 (Figure 8) en étant orienté pour que son arbre de sortie soit parallèle au premier axe et s'étende vers l'extrémité respective du châssis 4.

Chaque système vis-écrou 64 comprend une vis 64a parallèle au premier axe et un écrou 64b monté sur la vis 64a. Le mouvement de rotation de l'arbre de sortie du moteur 63 est transmis à la vis 64a par un engrenage 65 comprenant une troisième roue dentée 65a montée sur l'arbre de sortie et en engrènement avec une quatrième roue dentée 65b montée à une extrémité correspondante de la vis 64a.

Chaque écrou 64b est solidaire d'une tige de commande 62 qui se situe à l'extérieur du châssis 4, chaque tige de commande 62 étant de longueur fixe et portée par un bras 64c s'étendant à partir de l'écrou 64b respectif et passant à travers une fente prévue à cet effet dans l'enveloppe latérale du châssis 4, la fente étant de direction longitudinale parallèle au premier axe A1 et dimensionnée pour autoriser une translation du bras 64c sur une course suffisamment importante pour que les rotors 2, 3 puissent être inclinés jusqu'à des angles d'inclinaison maximaux souhaités.

Par conséquent, par commande du moteur 63 pour faire tourner son arbre de sortie dans un sens ou dans l'autre, on peut faire monter ou descendre l'écrou 64c et donc la tige de commande 62, la distance parcourue étant fonction de l'angle de rotation de l'arbre de sortie.

Chaque tige de commande 62 présente, à chacune de ses deux extrémités, une surface hémisphérique 62a en contact avec la face libre de l'un des plateaux glissants 60, 61. Les tiges de commande 62 se situent donc entre les plateaux glissants 60, 61.

Chaque plateau glissant 60, 61 se présente sous la forme d'une pièce annulaire ayant une face supérieure et une face inférieure. Le plateau glissant supérieur 60 est en liaison pivot avec la face inférieure de la partie centrale 20 du rotor supérieur 2, tandis que le plateau glissant inférieur 61 est en liaison pivot avec la face supérieure de la partie centrale 30 du rotor inférieur 3. Plus particulièrement, la face du plateau glissant 60, 61 qui est en contact avec la partie centrale 20, 30 du rotor 2, 3 présente une languette annulaire 60a, 61a reçue dans une rainure de forme et dimension correspondantes prévue dans ladite partie centrale 20, 30. Chaque plateau glissant 60, 61 porte en outre une pluralité d'aimants représentés schématiquement en 61b et uniquement visibles pour le plateau glissant 61, chacun positionné pour être en mesure d'attirer au moins l'une des tiges 62, 66, 67, ces dernières étant à cet effet faites, au moins à leurs extrémités libres, de matériau ferromagnétique. Le seul degré de liberté des tiges 62, 66, 67 étant la translation dans la direction parallèle au premier axe, on comprend aisément que la rotation de chacun des plateaux glissants 60, 61 autour de l'axe de rotation du rotor 2, 3 respectif est empêchée, la languette 60a, 61a et la rainure associée assurant le guidage en rotation du rotor 2, 3 par rapport au plateau glissant 60, 61 respectif. Les aimants 61b portés par chaque plateau glissant 60 ou 61 coopérant avec le matériau ferromagnétique des tiges constituent des moyens de blocage permettant d'empêcher la rotation du plateau glissant par rapport au rotor 2 ou 3.

Par conséquent, en déplaçant verticalement vers le haut ou vers le bas une tige de commande 62, cette dernière peut appuyer respectivement contre le plateau glissant supérieur 60 ou contre le plateau glissant inférieur 61, faisant ainsi tourner ce dernier, et donc le rotor 2, 3 auquel il est relié, autour d'un axe de rotation qui est horizontal, passe par le centre de la liaison rotule à doigt 7 et est perpendiculaire à la ligne droite reliant ledit centre et le point de contact entre la tige de commande 62 et le plateau glissant 60, 61. Le plateau glissant 60, 61 sur lequel la tige de commande 62 n'appuie pas est également amené à s'incliner de la même manière, mais en raison de l'attraction entre l'aimant 61b et la tige de commande 62.

L'angle d'inclinaison sera fonction de la distance parcourue par la tige de commande 62 par rapport à une position neutre dans laquelle les deux rotors 2 et 3 sont horizontaux, la distance étant commandée de manière précise par les moteurs pas à pas 63.

L'inclinaison des rotors 2 et 3 signifie une inclinaison correspondante des pales 22 et 32 autour de l'axe de roulis A2 et/ou de l'axe de tangage A3, et donc un contrôle de l'attitude en roulis et en tangage et de la direction de vol dans le plan horizontal.

Pour chaque tige de commande 62, est avantageusement prévue une tige miroir 66 de longueur fixe égale à celle de la tige de commande 62 et diamétralement opposée à cette dernière. Chaque tige miroir 66 est montée à translation libre dans la direction parallèle au premier axe A1, le guidage en translation étant assuré par deux oreilles 42 (figures 2 et 4) du châssis 4, extérieures à ce dernier et espacées l'une de l'autre selon le premier axe A1. Les tiges miroirs 66 servent à équilibrer les efforts appliqués sur les rotors 2, 3 par les tiges de commande 62.

Les tiges 67 sont des tiges de rattrapage d'usure à ressort de rappel et elles sont réparties angulairement autour du châssis 4, en étant elles aussi portées par des oreilles 42 (figure 2). Ces tiges 67 permettent d'assurer en permanence un contact en plusieurs points avec les plateaux glissants 60, 61 afin de maintenir le parallélisme des deux rotors 2, 3 et l'absence de jeu, même en cas d'usure des plateaux glissants 60, 61. Chaque tige 67 présentera avantageusement une surface de contact sphérique à chacune de ses extrémités.

Dans le mode de réalisation représenté, sont prévus deux tiges de commande 62, deux tiges miroirs 66 et quatre tiges de rattrapage d'usure 67, régulièrement réparties autour de la circonférence du châssis 4, et huit aimants 61b respectifs sont prévus pour chaque plateau glissant 60, 61, chacun dans une position en regard d'une extrémité respective d'une tige 62, 66, 67 respective.

A titre de variante il est possible d'assurer le glissement des plateaux 60 et 61 non pas par frottement mais par l'intermédiaire de roulements à billes disposés entre le plateau glissant 60, 61 et la partie centrale 20, 30 du rotor considéré.

Pour un aérodyne de masse réduite, les moyens de blocage magnétiques suffisent à assurer le blocage en rotation des plateaux glissants 60 et 61.

Pour un aérodyne de masse plus importante, il sera souhaitable de prévoir des moyens de blocage mécanique des plateaux glissants.

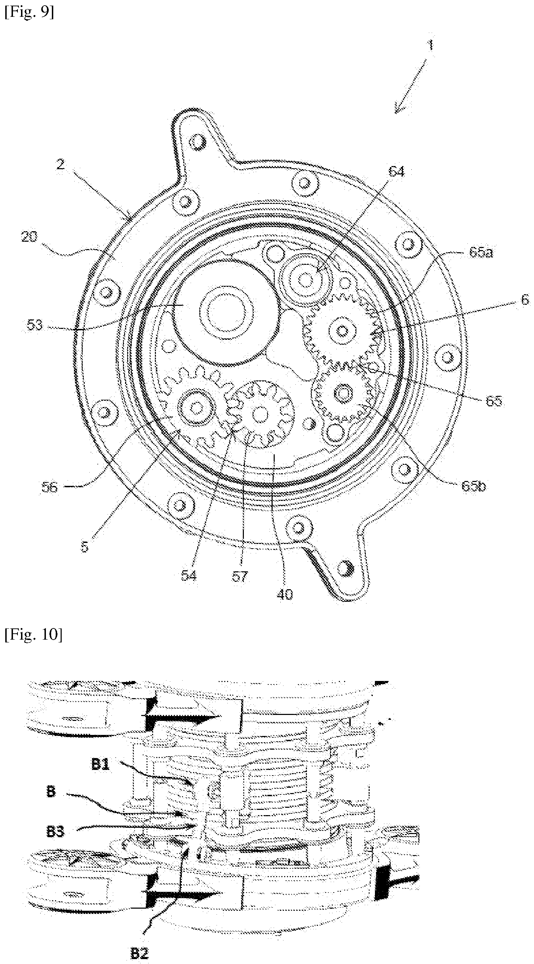

Un exemple d'un tel moyen de blocage est représenté à la Figure 10.

Conformément à ce mode de réalisation, les moyens de blocage comprennent au moins une biellette B qui est solidaire du châssis 4 par une première extrémité au niveau d'une liaison pivot B1 et qui est solidaire d'un plateau glissant 60 ou 61 par une deuxième extrémité au niveau d'une liaison rotule B2. Les extrémités de la biellette sont reliées par une tige coulissante B3. Ainsi la biellette B peut accompagner les déplacements du plateau glissant 60 ou 61 auquel elle est attachée tout en interdisant la rotation de ce dernier.

Des unités de contrôle (non représentées), notamment pour commander le fonctionnement du dispositif de propulsion 1, peuvent être intégrées à l'intérieur du châssis 4, entre les deux rotors 2, 3. Ces unités de contrôle peuvent être des unités de contrôle des moteurs, une antenne GPS, des unités de mesure inertielle, etc.

On constate donc que la seule masse mise en mouvement pour le contrôle de l'attitude en roulis et en tangage est celle des deux rotors 2, 3, laquelle masse peut être très faible, de sorte que le pilotage de l'aérodyne est très réactif.

De plus, le centre de gravité reste immobile lors des mouvements en roulis et/ou en tangage, ou est très peu affecté par ceux-ci, permettant ainsi d'éviter la création d'instabilité.

Le dispositif de propulsion 1 offre donc une très grande maniabilité de l'aérodyne.

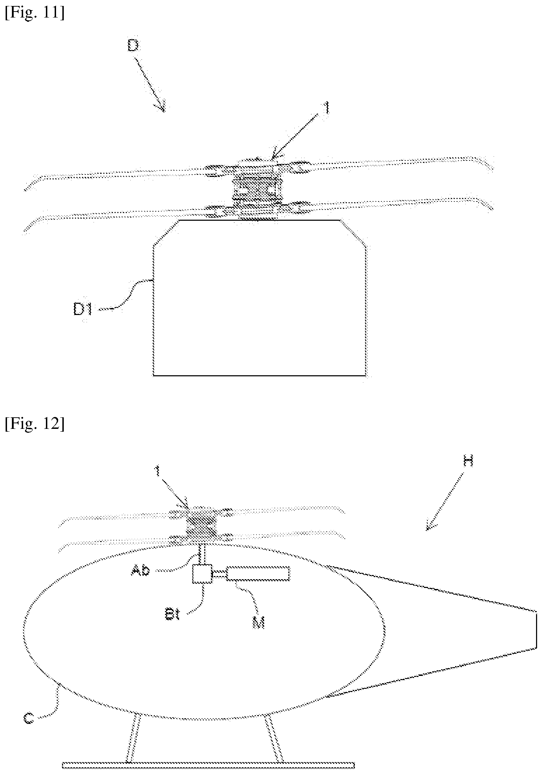

Par ailleurs, le dispositif de propulsion 1 est très compact, étant donné que l'ensemble des moyens d'entraînement en rotation des rotors et des moyens de commande de l'inclinaison des rotors autour des axes de roulis et de tangage se situent entre les deux rotors. Ainsi, comme on peut le voir sur la Figure 11, où l'on a représenté très schématiquement un drone D dont le corps D1 est équipé du dispositif de propulsion 1, la hauteur totale du drone D n'est pas affectée par la présence du dispositif de propulsion 1. On peut donc augmenter la taille des pales sans pour autant augmenter obligatoirement la taille du reste de l'aérodyne, pour une furtivité à la fois visuelle et sonore.

Il est bien entendu que le mode de réalisation particulier qui vient d'être décrit a été donné à titre indicatif et non limitatif, et que des modifications peuvent être apportées sans que l'on s'écarte pour autant de la présente invention.

Par exemple, comme illustré très schématiquement sur la Figure 12, on pourra prévoir qu'une partie des moyens moteurs se situe hors du châssis 4 et soit portée par la cellule C de l'aérodyne, notamment comme ici dans le cas d'un hélicoptère H qui nécessiterait une puissance motrice plus importante. Dans un tel cas, par exemple, les deuxièmes roues dentées 57, montées sur les arbres de sortie 55 des moteurs 53 dans le mode de réalisation décrit ci-dessus, pourraient simplement être montées chacune sur une extrémité d'un arbre de transmission Ab parallèle à l'axe de lacet A1 et entrant dans le châssis 4 par son extrémité inférieure ouverte, ces arbres de transmission Ab, dont seul un est représenté, étant reliés par tout moyen approprié à un moteur dédié M porté par la cellule C, comme par exemple par l'intermédiaire d'une boîte de transmission Bt.

Le dispositif de propulsion selon la présente invention permet alors de bénéficier des avantages des systèmes connus de rotors coaxiaux contrarotatifs pour hélicoptères, tout en surmontant leurs inconvénients dus à la présence de systèmes de commande cyclique à plateau et bielles, à savoir une forte complexité et un encombrement vertical pénalisant, l'hélicoptère ne pouvant être abrité dans un hangar non spécifiquement prévu pour l'accueillir.

## Revendications

1. Dispositif de propulsion (1) pour aérodyne à voilure tournante et à décollage et atterrissage verticaux, par rotors coaxiaux contrarotatifs (2, 3) mobiles en lacet, roulis et tangage, le dispositif de propulsion (1) comprenant :
- un châssis (4) creux et ayant un axe longitudinal qui, en utilisation, est coaxial à l'axe de lacet (A1),
- un rotor supérieur (2) et un rotor inférieur (3) ayant chacun une partie centrale (20, 30) annulaire configurée pour fixer à sa périphérie des pales (22, 32) avec un pas fixe, les rotors (2, 3) étant espacés l'un au-dessus de l'autre selon l'axe de lacet (A1), chaque rotor (2, 3) définissant un disque rotor et étant apte à être entraîné en rotation autour d'un axe de rotation qui est perpendiculaire au disque rotor et à être incliné autour de l'axe de roulis (A2) et de l'axe de tangage (A3),
- des moyens d'entraînement (5) pour entraîner en rotation chaque rotor (2, 3) autour de son axe de rotation, et
- des moyens de commande d'inclinaison (6) pour incliner les rotors (2, 3) autour de l'axe de roulis (A2) et de l'axe de tangage (A3), le dispositif de propulsion (1) étant **caractérisé par le fait que** les moyens d'entraînement (5) comprennent des moyens moteurs (53) et, pour chaque rotor (2, 3), une partie rotative (50) qui est apte à être entraînée en rotation autour de l'axe de lacet (A1) par les moyens moteurs (53), chaque partie rotative (50) se situant dans la partie centrale annulaire du rotor (2, 3) respectif et étant reliée à cette dernière par une liaison rotule à doigt (7), dont le centre est l'intersection du disque rotor respectif et de l'axe de lacet (A1) et dont l'axe est l'axe de rotation du rotor (2, 3).

2. Dispositif de propulsion (1) selon la revendication 1 dans lequel, les parties rotatives (50) sont chacune formées par une bague d'entraînement (50) montée rotative autour d'une portée circulaire (41) du châssis (4) dans laquelle est ménagée au moins une fenêtre (58) à travers laquelle s'étend un organe d'entraînement (56) apte à être entraîné en rotation par les moyens moteurs (53) et apte à entraîner en rotation la bague d'entraînement (50).

3. Dispositif de propulsion (1) selon la revendication 2 dans lequel, chaque rotor (2, 3) est en contact sphérique avec la bague d'entraînement (50) respective, le centre de la sphère de contact étant l'intersection de l'axe de lacet (A1) et du disque rotor du rotor (2, 3), et étant prévue une rainure (24) débouchant dans la surface intérieure de la partie centrale du rotor (2, 3) et dont la longueur est parallèle à l'axe de lacet (A1), rainure (24) dans laquelle un doigt radial (71) solidaire de la bague d'entraînement (50) est engagé de façon à transmettre au rotor (2, 3) le mouvement de rotation de la bague d'entraînement (50) autour de l'axe de lacet (A1) tout en autorisant des rotations du rotor (2, 3) autour de l'axe de roulis (A2) et de l'axe de tangage (A3).

4. Dispositif de propulsion (1) selon l'une quelconque des revendications 2 et 3 dans lequel, chaque bague d'entraînement (50) présente sur sa surface intérieure une denture (52) circonférentielle et l'organe d'entraînement (56) respectif est une première roue dentée (56) en engrènement avec la denture (52).

5. Dispositif de propulsion (1) selon l'une des revendications 1 à 4 dans lequel, les moyens moteurs (53) comprennent, pour chaque rotor (2, 3), un moteur (53) dédié audit rotor (2, 3) et ayant un arbre de sortie (55) qui est parallèle à l'axe de lacet (A1) et dont le mouvement de rotation est transmis à l'organe d'entraînement (56), facultativement par l'intermédiaire d'une seconde roue dentée (57) montée sur l'arbre de sortie (55) et en engrènement avec la première roue dentée (56).

6. Dispositif de propulsion (1) selon l'une quelconque des revendications 1 à 5 dans lequel, les moyens moteurs (53) pour les deux rotors (2, 3) se situent à l'intérieur du châssis (4), entre les parties rotatives (50), de préférence les moyens moteurs (53) comprenant deux moteurs dédiés (53) alignés l'un avec l'autre, l'arbre de sortie (55) d'un moteur (53) se situant côté rotor supérieur (2) tandis que l'arbre de sortie (55) de l'autre moteur (53) se situant côté rotor inférieur (3), les deux moteurs (53) s'étendant le long d'une paroi intérieure de l'enveloppe latérale du châssis (4).

7. Dispositif de propulsion (1) selon l'une quelconque des revendications 1 à 5 dans lequel, les moyens moteurs comprennent au moins un moteur situé à l'extérieur du châssis (4) et apte à produire un mouvement de sortie, et des moyens de transmission du mouvement de sortie du ou des moteurs aux parties rotatives (50) pour les entraîner en rotation, au moins une partie desdits moyens de transmission étant située à l'intérieur du châssis (4).

8. Dispositif de propulsion (1) selon l'une quelconque des revendications 1 à 7 dans lequel, les moyens de commande d'inclinaison (6) comprennent au moins deux tiges de commande (62), de longueur fixe, situées à l'extérieur du châssis (4), entre les rotors (2, 3), et déplaçables en translation parallèlement à l'axe de lacet (A1), dans les deux sens, de façon à ce que chacune soit apte à appuyer par une extrémité de celle-ci sur l'un des rotors (2, 3) et ainsi à le faire tourner autour d'un axe, les tiges de commande (62) étant écartées l'une de l'autre angulairement de telle sorte que lesdits axes sont différents, les moyens de commande d'inclinaison (6) comprenant en outre des moyens moteurs (63, 64, 65) pour déplacer en translation chacune des tiges (62).

9. Dispositif de propulsion (1) selon la revendication 8 dans lequel, les moyens moteurs (63, 64, 65) comprennent, pour chaque tige de commande (62), un moteur (63) bidirectionnel dédié dont l'arbre de sortie entraîne en rotation une vis (64a) parallèle à l'axe de lacet (A1) et sur laquelle est monté un écrou (64b) bloqué en rotation, de sorte qu'une rotation de la vis (64a) déplace l'écrou (64b) le long de la vis (64a), l'écrou (64b) portant un bras (64c) qui s'étend hors du châssis (4), en passant à travers une fente parallèle à l'axe de lacet (A1), et dont la tige de commande (62) est solidaire, les moteurs (63) étant, de préférence, des moteurs pas à pas.

10. Dispositif de propulsion (1) selon l'une quelconque des revendications 8 et 9 dans lequel il est prévu, pour chaque tige de commande (62), une tige dite miroir (66) de longueur fixe, située à l'extérieur du châssis (4), entre les rotors (2, 3), qui lui est parallèle et diamétralement opposée à la tige de commande (62) respective et déplaçable en translation parallèlement à l'axe de lacet (A1), dans les deux sens, et dont chacune des deux extrémités est en contact avec un rotor (2, 3) respectif.

11. Dispositif de propulsion (1) selon l'une des revendications 8 à 10 qui comprend deux tiges de commande (62), au moins les deux extrémités de chacune des tiges de commande (62) étant en contact sphérique avec un plateau glissant (60, 61) qui est disposé sur la partie centrale (20, 30) de la face de chaque rotor (2,3) orientée vers l'autre rotor (2,3), plateau glissant monté d'une manière autorisant une rotation relative entre le plateau glissant (60, 61) et le rotor (2, 3) autour de l'axe de rotation du rotor (2, 3), des moyens de blocage étant prévus pour empêcher la rotation du plateau glissant par rapport aux tiges.

12. Dispositifs de propulsion (1) selon la revendication 11 dans lequel, les moyens de blocage comprennent des aimants, portés par les tiges ou par le plateau glissant (60, 61), aimants coopérant avec un matériau ferromagnétique respectivement porté ou formant le plateau glissant ou les tiges, de telle sorte qu'une rotation du plateau glissant (60, 61) autour de l'axe de rotation est interdite par la force d'attraction entre les tiges de commande (62) et le plateau glissant (60, 61) résultant de la coopération desdits aimants et desdites pièces ferromagnétiques.

13. Dispositifs de propulsion (1) selon la revendication 11 dans lequel, les moyens de blocage comprennent au moins une biellette (B) solidaire du châssis par une première extrémité au niveau d'une liaison pivot (P1) et solidaire d'un plateau glissant (60, 61) par une deuxième extrémité au niveau d'une liaison rotule (B2), les extrémités de la biellette (B) étant reliées par une tige coulissante (B3), la biellette (B) accompagnant ainsi les déplacements du plateau glissant (60, 61) tout en interdisant sa rotation.

14. Dispositifs de propulsion (1) selon une des revendications 11 à 13 dans lequel, le plateau glissant est relié à la partie centrale (20, 30) du rotor (2,3) par un roulement.

15. Dispositif de propulsion (1) selon une des revendications 10 à 13 comprenant en outre des tiges de rattrapage d'usure (67), à ressort de rappel, situées à l'extérieur du châssis (4), entre les rotors (2, 3), et déplaçables en translation parallèlement à l'axe de lacet (A1), dans les deux sens, et dont chacune des deux extrémités est en contact, par sollicitation élastique, avec le plateau glissant (60, 61), les tiges de commande (62) et les tiges de rattrapage d'usure (67), et le cas échéant les tiges miroirs (66), étant régulièrement réparties autour du châssis (4) et toutes à la même distance de l'axe de lacet (A1).

16. Dispositif de propulsion (1) selon l'une des revendications 8 à 15, prises en dépendance de la revendication 6, dans lequel, l'ensemble des moyens moteurs (63, 64, 65) se situent entre les parties rotatives (50), et de préférence les moteurs (63) dédiés à la commande de l'inclinaison sont alignés l'un avec l'autre et disposés latéralement aux moteurs (53) dédiés à l'entraînement des parties rotatives (50), l'arbre de sortie d'un moteur (63) dédié à la commande de l'inclinaison se situant côté rotor supérieur (2) tandis que l'arbre de sortie de l'autre moteur (63) se situe côté rotor inférieur (3), les vis (64c) s'étendant à côté des différents moteurs (53, 63) et le long de la paroi intérieure de l'enveloppe latérale du châssis (4).

17. Aérodyne à voilure tournante et à décollage et atterrissage verticaux (D, H), dont la propulsion est assurée par un dispositif de propulsion (1), dans lequel le dispositif de propulsion (1) est tel que défini à l'une quelconque des revendications 1 à 16.

## Patentansprüche

1. - Antriebsvorrichtung (1) für einen Drehflügler mit Senkrechtstart- und Landung durch koaxiale gegendrehende Rotoren (2, 3), die an der Gier-, Roll- und Nickachse beweglich sind, wobei die Antriebsvorrichtung (1) Folgendes umfasst:
- einen hohlen Rahmen (4) und aufweisend eine Längsachse, die, bei Verwendung, koaxial mit der Gierachse (A1) ist,
- einen oberen Rotor (2) und einen unteren Rotor (3), die jeweils einen ringförmigen zentralen Teil (20, 30) aufweisen, der konfiguriert ist, um an seinem Umfang Schaufeln (22, 32) mit einer festen Blattneigung zu fixieren, wobei die Rotoren (2, 3) übereinander gemäß der Gierachse (A1) beabstandet sind, wobei jeder Rotor (2, 3) eine Rotorscheibe definiert und ausgelegt ist, um um eine Drehachse in Drehung versetzt zu werden, die senkrecht zur Rotorscheibe ist, und um um die Rollachse (A2) und die Nickachse (A3) geneigt zu sein,
- Antriebsmittel (5), um jeden Rotor (2, 3) um seine Drehachse in Drehung zu versetzen, und
- Mittel zur Steuerung der Neigung (6), um die Rotoren (2, 3) um die Rollachse (A2) und die Nickachse (A3) zu neigen,
wobei die Antriebsvorrichtung (1) **dadurch gekennzeichnet ist, dass** die Antriebsmittel (5) Motormittel (53) umfassen, und, für jeden Rotor (2, 3), einen drehenden Teil (50), der ausgelegt ist, um um die Gierachse (A1) durch die Motormittel (53) in Drehung versetzt zu werden, wobei sich jeder drehende Teil (50) im ringförmigen zentralen Teil des jeweiligen Rotors (2, 3) befindet und mit diesem Letzteren durch eine Kugelgelenk-Fingerverbindung (7) verbunden ist, deren Zentrum die Schnittstelle der jeweiligen Rotorscheibe und der Gierachse (A1) ist, und deren Achse die Drehachse des Rotors (2, 3) ist.

2. - Antriebsvorrichtung (1) nach Anspruch 1, wobei die drehenden Teile (50) jeweils durch einen Antriebsring (50) gebildet sind, der drehend um einen Fasenbereich (41) des Rahmens (4) montiert ist, in dem mindestens ein Fenster (58) angebracht ist, durch das sich ein Antriebsorgan (56) erstreckt, das ausgelegt ist, um durch die Motormittel (53) in Drehung versetzt zu werden, und ausgelegt ist, um den Antriebsring (50) in Drehung zu versetzen.

3. - Antriebsvorrichtung (1) nach Anspruch 2, wobei jeder Rotor (2, 3) in sphärischem Kontakt mit dem jeweiligen Antriebsring (50) ist, wobei das Zentrum der Kontaktsphäre die Schnittstelle der Gierachse (A1) und der Rotorscheibe des Rotors (2, 3) ist, und wobei eine Nut (24) vorgesehen ist, die auf der Innenfläche des zentralen Teils des Rotors (2, 3) mündet, und deren Länge parallel zur Gierachse (A1) ist, eine Nut (24), in der ein radialer Finger (71), fest verbunden mit dem Antriebsring (50), derart eingegriffen ist, dass er an den Rotor (2, 3) die Drehbewegung des Antriebsrings (50) um die Gierachse (A1) überträgt und gleichzeitig Drehungen des Rotors (2, 3) um die Rollachse (A2) und die Nickachse (A3) ermöglicht.

4. - Antriebsvorrichtung (1) nach einem der Ansprüche 2 und 3, wobei jeder Antriebsring (50) auf seiner Innenfläche eine Umfangsverzahnung (52) aufweist und das jeweilige Antriebsorgan (56) ein erstes Zahnrad (56) in Eingriff mit der Verzahnung (52) ist.

5. - Antriebsvorrichtung (1) nach einem der Ansprüche 1 bis 4, wobei die Motormittel (53) für jeden Rotor (2, 3) einen Motor (53) umfassen, der dem Rotor (2, 3) zugeordnet ist und eine Antriebswelle (55) aufweist, die parallel zur Gierachse (A1) ist, und deren Drehbewegung an das Antriebsorgan (56) optional mit Hilfe eines zweiten Zahnrads (57) übertragen wird, das auf die Antriebswelle (55) und in Eingriff mit dem ersten Zahnrad (56) montiert ist.

6. - Antriebsvorrichtung (1) nach einem der Ansprüche 1 bis 5, wobei sich die Motormittel (53) für die zwei Rotoren (2, 3) im Inneren des Rahmens (4), zwischen den drehenden Teilen (50), befinden, wobei die Motormittel (53) vorzugsweise zwei zugeordnete Motoren (53) umfassen, die miteinander ausgefluchtet sind, wobei sich die Antriebswelle (55) eines Motors (53) an der Seite des oberen Rotors (2) befindet, während sich die Antriebswelle (55) des anderen Motors (53) an der Seite des unteren Rotors (3) befindet, wobei sich die zwei Motoren (53) entlang einer inneren Wand der seitlichen Umhüllung des Rahmens (4) befinden.

7. - Antriebsvorrichtung (1) nach einem der Ansprüche 1 bis 5, wobei die Motormittel mindestens einen Motor umfassen, der sich außerhalb des Rahmens (4) befindet und ausgelegt ist, um eine Antriebsbewegung hervorzurufen, und Mittel zur Übertragung der Antriebsbewegung des oder der Motoren an die drehenden Teile (50), um sie in Drehung zu versetzen, wobei sich mindestens ein Teil der Übertragungsmittel im Inneren des Rahmens (4) befindet.

8. - Antriebsvorrichtung (1) nach einem der Ansprüche 1 bis 7, wobei die Mittel zur Steuerung der Neigung (6) mindestens zwei Steuerstangen (62) mit fester Länge umfassen, die sich außerhalb des Rahmens (4) zwischen den Rotoren (2, 3) befinden und in Translation parallel zur Gierachse (A1) in den zwei Richtungen verschoben werden können, so dass jede dazu in der Lage ist, durch ein Ende derselben auf einen der Rotoren (2, 3) zu drücken und ihn so um eine Achse drehen zu lassen, wobei die Steuerstangen (62) voneinander im Winkel derart beabstandet sind, dass die Achsen verschieden sind, wobei die Mittel zur Steuerung der Neigung (6), außerdem Motormittel (63, 64, 65) umfassen, um jede der Stangen (62) in Translation zu verschieben.

9. - Antriebsvorrichtung (1) nach Anspruch 8, wobei die Motormittel (63, 64, 65) für jede Steuerstange (62) einen zugeordneten bidirektionalen Motor (63) umfassen, dessen Antriebswelle eine Schraube (64a) parallel zur Gierachse (A1) in Drehung versetzt, und auf der eine Schraubenmutter (64b) drehfest montiert ist, so dass eine Drehung der Schraube (64a) die Schraubenmutter (64b) entlang der Schraube (64a) verschiebt, wobei die Schraubenmutter (64b) einen Arm (64c) trägt, der sich aus dem Rahmen (4) erstreckt, indem er durch einen Schlitz parallel zur Gierachse (A1) verläuft, und mit dem die Steuerstange (62) fest verbunden ist, wobei die Motoren (63) vorzugsweise Schrittmotoren sind.

10. - Antriebsvorrichtung (1) nach einem der Ansprüche 8 und 9, wobei für jede Steuerstange (62) eine Stange, bezeichnet als Spiegelstange (66), mit fester Länge vorgesehen ist, die sich außerhalb des Rahmens (4), zwischen den Rotoren (2, 3) befindet, die mit demselben parallel und der jeweiligen Steuerstange (62) diametral entgegengesetzt ist und in Translation parallel zur Gierachse (A1) in den zwei Richtungen verschoben werden kann, und wobei jedes der zwei Enden mit einem jeweiligen Rotor (2, 3) in Kontakt ist.

11. - Antriebsvorrichtung (1) nach einem der Ansprüche 8 bis 10, die zwei Steuerstangen (62) umfasst, wobei mindestens die zwei Enden jeder der Steuerstangen (62) in sphärischem Kontakt mit einer Gleitplatte (60, 61) sind, die auf dem zentralen Teil (20, 30) der Seite jedes Rotors (2, 3) angeordnet ist, der zum anderen Rotor (2, 3) gerichtet ist, wobei die Gleitplatte derart montiert ist, dass sie eine relative Drehung zwischen der Gleitplatte (60, 61) und dem Rotor (2, 3) um die Drehachse des Rotors (2, 3) ermöglicht, wobei Blockiermittel vorgesehen sind, um die Drehung der Gleitplatte mit Bezug auf die Stangen zu verhindern.

12. - Antriebsvorrichtungen (1) nach Anspruch 11, wobei die Blockiermittel Magnete umfassen, die von den Stangen oder von der Gleitplatte (60, 61) getragen werden, Magnete, die mit einem ferromagnetischen Material zusammenarbeiten, das jeweils von der Gleitplatte oder den Stangen getragen wird oder diese bildet, so dass eine Drehung der Gleitplatte (60, 61) um die Drehachse von der Anziehungskraft zwischen den Steuerstangen (62) und der Gleitplatte (60, 61), die sich aus der Zusammenarbeit der Magnete und der ferromagnetischen Teile ergibt, verhindert wird.

13. - Antriebsvorrichtungen (1) nach Anspruch 11, wobei die Blockiermittel mindestens einen Schwingarm (B) umfassen, der durch ein erstes Ende auf der Ebene einer Schwenkverbindung (P1) fest mit dem Rahmen verbunden ist und fest mit einer Gleitplatte (60, 61) durch ein zweites Ende auf der Ebene einer Gelenkverbindung (B2) verbunden ist, wobei die Enden des Schwingarms (B) durch eine gleitende Stange (B3) verbunden sind, wobei der Schwingarm (B) somit die Verschiebungen der Gleitplatte (60, 61) begleitet und gelichzeitig ihre Drehung verhindert.

14. - Antriebsvorrichtungen (1) nach einem der Ansprüche 11 bis 13, wobei die Gleitplatte mit dem zentralen Teil (20, 30) des Rotors (2, 3) durch ein Lager verbunden ist.

15. - Antriebsvorrichtung (1) nach einem der Ansprüche 10 bis 13, umfassend außerdem Verschleiß-Ausgleichsstangen (67) mit Rückstellfeder, die sich außerhalb des Rahmens (4) zwischen den Rotoren (2, 3) befinden und in Translation parallel zur Gierachse (A1) in den zwei Richtungen verschoben werden können, und wobei jedes der zwei Enden durch elastische Vorspannung mit der Gleitplatte (60, 61) in Kontakt ist, wobei die Steuerstangen (62) und die Verschleiß -Ausgleichsstangen (67) und gegebenenfalls die Spiegelstangen (66) gleichmäßig um den Rahmen (4) und alle im gleichen Abstand von der Gierachse (A1) verteilt sind.

16. - Antriebsvorrichtung (1) nach einem der Ansprüche 8 bis 15 in Abhängigkeit von Anspruch 6, wobei sich die Gesamtheit der Motormittel (63, 64, 65) zwischen den drehenden Teilen (50) befindet und vorzugsweise die Motoren (63), die der Steuerung der Neigung zugeordnet sind, miteinander ausgefluchtet und seitlich an den Motoren (53), die dem Antrieb der drehenden Teile (50) zugeordnet sind, angeordnet sind, wobei sich die Antriebswelle eines Motors (63), die der Steuerung der Neigung zugeordnet ist, an der Seite des oberen Rotors (2) befindet, während sich die Antriebswelle des anderen Motors (63) an der Seite des unteren Rotors (3) befindet, wobei sich die Schrauben (64c) an der Seite der verschiedenen Motoren (53, 63) und entlang der inneren Wand der seitlichen Umhüllung des Rahmens (4) erstrecken.

17. - Drehflügler mit Senkrechtstart- und Landung (D, H), dessen Antrieb durch eine Antriebsvorrichtung (1) sichergestellt ist, wobei die Antriebsvorrichtung (1) wie in einem der Ansprüche 1 bis 16 definiert ist.

## Claims

1. - A propulsion device (1) for a vertical take-off and landing rotary-wing aerodyne, by means of coaxial contra-rotating rotors (2, 3) that can move in yaw, roll and pitch, the propulsion device (1) including:
- a hollow frame (4) having a longitudinal axis which, in use, is coaxial with the yaw axis (A1),
- an upper rotor (2) and a lower rotor (3) each having an annular central part (20, 30) configured to secure to its periphery fixed pitch blades (22, 32), the rotors (2, 3) being spaced apart one above the other along the yaw axis (A1), each rotor (2, 3) defining a rotor disc and being adapted to be driven in rotation about an axis of rotation that is perpendicular to the rotor disc and to be tilted about the roll axis (A2) and the pitch axis (A3),
- drive means (5) for driving each rotor (2, 3) in rotation about its axis of rotation, and
- tilt control means (6) for tilting the rotors (2, 3) about the roll axis (A2) and the pitch axis (A3),
the propulsion device (1) being **characterised in that** the drive means (5) includes motor means (53) and, for each rotor (2, 3), a rotary part (50) which is adapted to be driven in rotation about the yaw axis (A1) by the motor means (53), each rotary part (50) being located in the annular central part of the respective rotor (2, 3) and being connected to the latter by a pin spherical joint connection (7), the centre of which is the intersection of the respective rotor disc and the yaw axis (A1) and the axis of which is the axis of rotation of the rotor (2, 3).

2. - The propulsion device (1) according to claim 1, wherein the rotary parts (50) are each formed by a drive ring (50) rotatably mounted on a circular bearing surface (41) of the frame (4) in which is provided at least one window (58) through which extends a drive member (56) adapted to be driven in rotation by the motor means (53) and adapted to drive the drive ring (50) in rotation.

3. - The propulsion device (1) according to claim 2, wherein each rotor (2, 3) is in spherical contact with the respective drive ring (50), the centre of the contact sphere being the intersection of the yaw axis (A1) and the rotor disc of the rotor (2, 3), and there being provided a groove (24) which opens on the inner surface of the central part of the rotor (2, 3) and has a length parallel to the yaw axis (A1), in which groove (24) a radial pin (71) secured to the drive ring (50) is engaged so as to transmit to the rotor (2, 3) the rotational movement of the drive ring (50) about the yaw axis (A1) while allowing rotations of the rotor (2, 3) about the roll axis (A2) and the pitch axis (A3).

4. - The propulsion device (1) according to any one of claims 2 and 3, wherein each drive ring (50) is provided, on its inner surface, with a circumferential toothing (52) and the respective drive member (56) is a first gearwheel (56) in mesh with the toothing (52).

5. - The propulsion device (1) according to any one of claims 1 to 4, wherein the motor means (53) includes, for each rotor (2, 3), a motor (53) dedicated to said rotor (2, 3) and having an output shaft (55) parallel to the yaw axis (A1) and whose rotational movement is transmitted to the drive member (56), optionally by means of a second gearwheel (57) mounted on the output shaft (55) and in mesh with the first gearwheel (56).

6. - The propulsion device (1) according to any one of claims 1 to 5, wherein the motor means (53) for both rotors (2, 3) is located inside the frame (4), between the rotary parts (50), preferably the motor means (53) including two dedicated motors (53) aligned with each other, the output shaft (55) of one motor (53) being located on the upper rotor (2) side while the output shaft (55) of the other motor (53) being located on the lower rotor (3) side, both motors (53) extending along an inner wall of the side envelope of the frame (4).

7. - The propulsion device (1) according to any one of claims 1 to 5, wherein the motor means includes at least one motor located outside the frame (4) and adapted to produce an output motion, and means for transmitting the output motion of the motor(s) to the rotary parts (50) to drive them in rotation, at least part of said transmission means being located inside the frame (4).

8. - The propulsion device (1) according to any one of claims 1 to 7, wherein the tilt control means (6) includes at least two control rods (62), of fixed length, located outside the frame (4), between the rotors (2, 3), and movable in translation parallel to the yaw axis (A1), in both directions, so that each is able to push with one end thereof against one of the rotors (2, 3) and thus to rotate it about an axis, the control rods (62) being angularly spaced from each other so that said axes are different, the tilt control means (6) further including motor means (63, 64, 65) for translating each of the rods (62) .

9. - The propulsion device (1) according to claim 8, wherein the motor means (63, 64, 65) includes, for each control rod (62), a dedicated bidirectional motor (63) whose output shaft rotates a screw (64a) parallel to the yaw axis (A1) and on which is mounted a rotationally locked nut (64b), so that rotation of the screw (64a) moves the nut (64b) along the screw (64a), the nut (64b) carrying an arm (64c) which extends out of the frame (4), passing through a slot parallel to the yaw axis (A1), and to which the control rod (62) is secured, the motors (63) preferably being stepper motors.

10. - The propulsion device (1) according to any one of claims 8 and 9, wherein for each control rod (62) there is provided a so-called mirror rod (66) of fixed length, located outside the frame (4), between the rotors (2, 3), which is parallel to and diametrically opposite the respective control rod (62) and movable in translation parallel to the yaw axis (A1) in both directions, and each of the two ends of every mirror rod (66) is in contact with a respective rotor (2, 3).

11. - The propulsion device (1) according to any one of claims 8 to 10, wherein it includes two control rods (62), at least the two ends of each of the control rods (62) being in spherical contact with a sliding plate (60, 61) which is provided on the central part (20, 30) of the side of each rotor (2,3) facing the other rotor (2, 3), the sliding plate being mounted in a manner allowing relative rotation between the sliding plate (60, 61) and the rotor (2, 3) about the axis of rotation of the rotor (2, 3), blocking means being provided to prevent rotation of the sliding plate relative to the rods.

12. - The propulsion device (1) according to claim 11, wherein the blocking means includes magnets, carried by the rods or by the sliding plate (60, 61), which magnets cooperate with a ferromagnetic material respectively carried by or forming the sliding plate or the rods, such that rotation of the sliding plate (60, 61) about the axis of rotation is prevented by the attractive force between the control rods (62) and the sliding plate (60, 61) resulting from the cooperation of said magnets and said ferromagnetic parts.

13. - The propulsion device (1) according to claim 11, wherein the blocking means includes at least one link (B) secured to the frame by a first end at a pivot connection (P1) and secured to a sliding plate (60, 61) by a second end at a spherical joint connection (B2), the ends of the link (B) being connected by a sliding rod (B3), the link (B) thus accompanying the movements of the sliding plate (60, 61) while preventing its rotation.

14. - The propulsion device (1) according to any one of claims 11 to 13, wherein the sliding plate is connected to the central part (20, 30) of the rotor (2, 3) by a rolling bearing.

15. - The propulsion device (1) according to any one of claims 10 to 14, wherein it also includes springloaded wear take-up rods (67) located outside the frame (4), between the rotors (2, 3), and movable in translation parallel to the yaw axis (A1), in both directions, and each of two ends of every wear take-up rod (67) is in contact with the sliding plate (60, 61) by resilient bias, the control rods (62) and the wear take-up rods (67), and if applicable the mirror rods (66), being regularly distributed around the frame (4) and all at the same distance from the yaw axis (A1).

16. - The propulsion device (1) according to any one of claims 8 to 15, when depending on claim 6, wherein all the motor means (63, 64, 65) are located between the rotary parts (50), and preferably the motors (63) dedicated to the tilt control are aligned with each other and arranged laterally to the motors (53) dedicated to driving the rotary parts (50), wherein the output shaft of one motor (63) dedicated to tilt control is located on the upper rotor side (2) and the output shaft of the other motor (63) is located on the lower rotor side (3), the screws (64c) extending next to the plurality of motors (53, 63) and along the inner wall of the side envelope of the frame (4).

17. - A vertical take-off and landing rotary-wing aerodyne (D, H), the propulsion of which is provided by a propulsion device (1), wherein the propulsion device (1) is as defined in any one of claims 1 to 16.
